Europäisches Patentamt

European Patent Office

Office européen des brevets

(19)

(11) Veröffentlichungsnummer : **0 167 080**
**B1**

(12) **EUROPÄISCHE PATENTSCHRIFT**

(45) Veröffentlichungstag der Patentschrift :
20.09.89

(21) Anmeldenummer : 85107782.6

(22) Anmeldetag : 24.06.85

(51) Int. Cl.⁴ : **G 05 B 19/407**

(54) **Rechnersteuerung für einen Mehrachsen-Industrieroboter.**

(30) Priorität : 05.07.84 DE 3424762

(43) Veröffentlichungstag der Anmeldung :
08.01.86 Patentblatt 86/02

(45) Bekanntmachung des Hinweises auf die Patenterteilung : 20.09.89 Patentblatt 89/38

(84) Benannte Vertragsstaaten :
DE IT SE

(56) Entgegenhaltungen :
EP–A– 0 086 950
US–A– 3 479 574

(73) Patentinhaber : Siemens Aktiengesellschaft
Wittelsbacherplatz 2
D-8000 München 2 (DE)

(72) Erfinder : Bartelt, Richard, Dipl.-Ing.
Hartmannstrasse 135
D-8520 Erlangen (DE)
Erfinder : Meier, Christof, Dr.
Burgleite 25
D-8551 Heroldsbach (DE)

EP 0 167 080 B1

Anmerkung : Innerhalb von neun Monaten nach der Bekanntmachung des Hinweises auf die Erteilung des
europäischen Patents im Europäischen Patentblatt kann jedermann beim Europäischen Patentämt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren zur Steuerung eines Mehrachsen-Industrieroboters, bei dem die in raumfest auf den Fußpunkt des Roboters bezogenen Koordinaten vorgegebene Bewegung der Roboterspitze in entsprechende Sollwerte für die Drehbewegungen rotatorische bzw. Verfahrwege linearer Antriebe der einzelnen Achsen transformiert wird, wobei dann, wenn mindestens ein Geschwindigkeitssollwert einer Achse seinen zugeordneten Grenzwert überschreitet, die Bahngeschwindigkeit der vorgegebenen Bewegung solange reduziert wird, bis keiner der Geschwindigkeitssollwerte seinen zugeordneten Grenzwert mehr überschreitet.

Das Abfahren von linearen Bahnen mit Orientierungsnachführung eines Werkzeuges bedingt im allgemeinen einen Sechsachsenroboter. Steuerungen für derartige Sechsachsen-Gelenkroboter mit Koordinatentransformation sind bekannt (vgl. beispielsweise US-PS 39 09 600 oder 39 20 972). Bei der Berechnung der Transformationswerte kann es bei gewissen Achsenkonstellationen geschehen, daß einzelne Achsen sehr hohe Beschleunigungs- und Geschwindigkeitswerte annehmen müßten, um die vorgegebene Bahn einhalten zu können. Die sich so ergebenden theoretischen Werte können die zulässigen Grenzen, sei es von seiten der Antriebe oder von der mechanischen Sicherheit her, bei weitem übersteigen. Um derartige Überlastungen zu vermeiden, wäre es z. B. denkbar, die Steuerung so auszulegen, daß der Roboter in diesen kritischen Lagen stehen bleibt. Ausgehend von einem so gemeldeten Stillstand müßte dann eine andere Bahn programmiert werden. Eine andere Möglichkeit bestünde in der Begrenzung der ermittelten Sollwerte für Geschwindigkeit und Beschleunigung. Dies hätte jedoch zur Folge, daß in vielen Fällen der vorgeschriebene, z. B. geradlinige Bahnweg nicht eingehalten werden kann.

Eine Einrichtung gemäß der eingangs genannten Art, wie sie aus der EP-AL-0 086 950 bekannt ist, beseitigt diese Probleme zwar weitgehend, jedoch hat sich gezeigt, daß dabei die Regelung bestimmter Achsen relativ nahe der Roboterspitze leicht instabil werden kann.

Die Aufgabe der vorliegenden Erfindung besteht darin, eine Steuerung der eingangs genannten Art so auszubilden, daß ein äußerst stabiles Regelverfahren erreicht wird.

Diese Aufgabe wird dadurch gelöst, daß die Bahngeschwindigkeit der Roboterspitze in vorgegebenen Lagebereichen einzelner Achsen, d. h. Winkelbereiche bei rotatorischen bzw. Streckenbereiche bei linearen Antrieben, zusätzlich reduziert wird und daß dabei die Bereichsgrenzen der Lagebereiche von der jeweiligen Bahngeschwindigkeit und dem Betrag der Bahnbeschleunigung der Roboterspitze derart abhängig gemacht sind, daß, je höher die Bahngeschwindigkeit und je niedriger der Betrag der Beschleunigung der Bahngeschwindigkeit ist, desto mehr die Bereichsbreite vergrößert wird.

Anhand eines in der Zeichnung dargestellten Ausführungsbeispiels seien die Erfindung sowie ihre vorteilhaften Ausgestaltungen näher erläutert. Dabei zeigen

Figur 1 das Prinzipschema eines Sechsachsen-Industrie roboters,

Figur 2 das Grundprinzip der Steuerung,

Figur 3 ein Prinzipschaltbild des zur Geschwindigkeitsoptimierung verwendeten Steuerungsteils,

Figur 4 Einzelheiten des vorgenannten Geschwindigkeitsoptimierungsteils nach Figur 3,

Figuren 5 bis 7 Bahn- und Achsgeschwindigkeiten des Industrieroboters ohne Führung der Geschwindigkeit,

Figuren 8 bis 10 Bahn- und Achsgeschwindigkeiten des Industrieroboters mit Führung der Geschwindigkeit,

Figur 11 das Verfahren zur Extrapolation der Geschwindigkeitssollwerte und

Figur 12 das Regelverhalten während der Geschwindigkeitsführung.

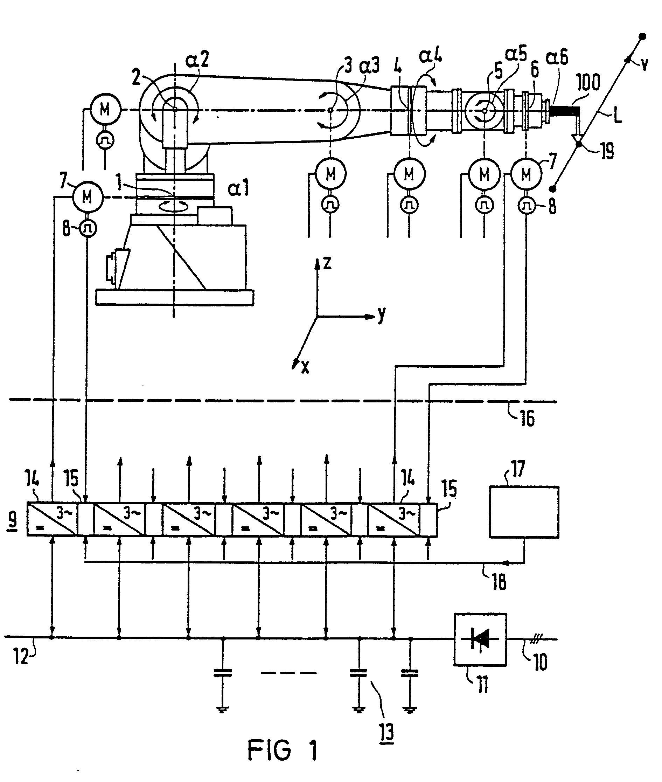

Der in Figur 1 schematisch dargestellte Gelenk-Industrie-roboter hat sechs Gelenke 1 bis 6, durch die Drehungen in sechs Achsen $\alpha 1$ bis $\alpha 6$ möglich sind. Die zum Antrieb der einzelnen Gelenke 1 bis 6 dienenden Drehstrommotoren 7 sind zusammen mit den zugehörigen Untersetzungsgetrieben und den an ihnen angeflanschten Weggebern 8 in die Gelenke 1 bis 6 integriert. Am Gelenk 6 ist dann das schematisch gezeigte Werkzeug 100 angeordnet.

Das zur Speisung der Motoren 7 dienende System 9, das stationär in einem Schaltschrank angeordnet ist — wie durch die gestrichelte Linie 16 angedeutet —, besteht aus einem an ein Drehstromnetz 10 angeschlossenen Stromrichter 11, einen Gleichspannungszwischenkreis 12 mit Kondensatorbatterie 13 und einzelnen Stromrichtern 14 zur Speisung der Motoren 7. Jedem Stromrichter 14 ist ein Steuerteil 15 zugeordnet, das wie durch den Pfeil 18 angeordnet, seine Steuerbefehle aus einer Rechnersteuerung 17 erhält. Eine derartige Steuerung ist beispielsweise in der Siemens-Zeitschrift 1981, Seiten 285 bis 289, beschrieben.

Im Regelfall werden bei der Programmierung die von der Roboterspitze 19 zu verfahrenden Bahnen, z. B. die Gerade L, die mit vorgegebener Geschwindigkeit V zu durchfahren ist, in bezug auf ein ortsfestes Koordinatensystem xyz vorgegeben. Diese vorgegebenen kartesischen Koordinatenwerte werden steuerungsintern in entsprechende Drehbewegungen der einzelnen Achsen $\alpha 1$ bis $\alpha 6$ umgesetzt. Transformationen dieser Art sind beispielsweise in den eingangs genannten US-Patentschriften näher beschrieben. Soll z. B. die Spitze 19 auf der genannten Bahn L laufen und soll dabei gleichzeitig die Orientierung des dort gehaltenen Werkzeuges 100 im Raum konstant bleiben, so bleibt es nicht aus, daß unter Umständen

2

alle Achsen des Roboters während des Durchlaufens einer Bahn angesteuert werden. Wie bereits bemerkt, kann dies unter bestimmten ungünstigen Konstellationen dazu führen, daß sich durch die mathematisch-kinematischen Gegebenheiten des Roboters hohe Geschwindigkeiten in einzelnen Achsen ergeben. Durch einen Zusatz zu einer an sich bekannten Steuerung sollen diese unzulässigen Geschwindigkeiten vermieden werden und gleichzeitig die Bahntreue erhalten bleiben.

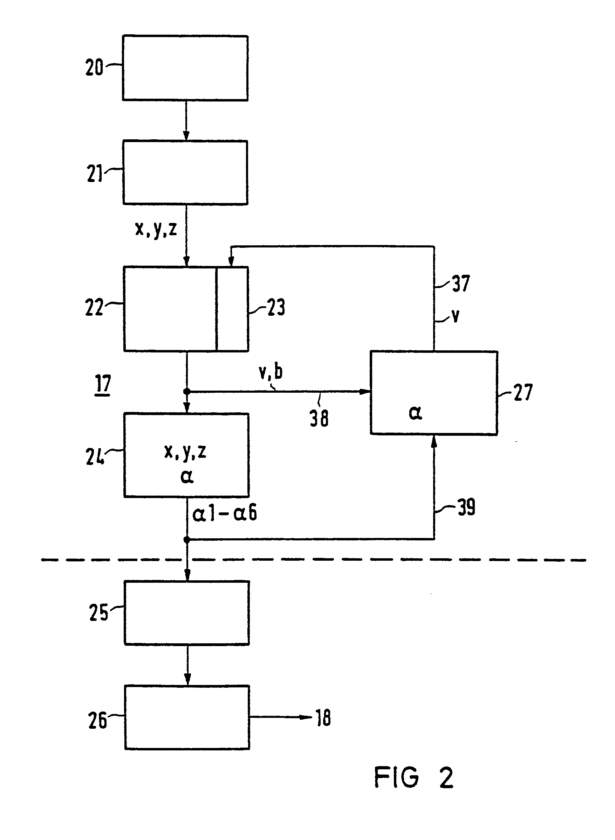

In Figur 2 ist der Grundaufbau der Steuerung gezeigt, wobei der Einfachheit halber die gegebenenfalls in einem Rechner zusammengefaßten Einheiten in einzelnen Funktionsblöcken dargestellt sind. Wie ersichtlich, wird das von einem Anwenderprogrammspeicher 20 kommende Programm mit der vorgegebenen Bewegung in einem Decodierbaustein 21 decodiert und in einem Interpolator 22, die zwischen vorgegebenen Punkten liegenden Zwischenpunkte berechnet, wobei die Geschwindigkeit der Ausgabe der Zwischenpunkte die Bewegungsgeschwindigkeit V bestimmt. Die Einstellbarkeit dieser Geschwindigkeitsausgabe ist durch das Bahngeschwindigkeitsführungsteil 23 angedeutet. Die vom Interpolator 22 ausgegebenen Werte liegen im kartesischen Koortinatensystem x, y, z vor, welches raumfest ist. Die Werte werden daher in einem Transformationsbaustein 24 von kartesischen Koordinaten xyz in entsprechende Sollwerte (Sollwinkel) für die Achsen $\alpha1$ bis $\alpha6$ umgeformt. Diese ebenfalls mit vorbestimmter Geschwindigkeit ausgegebenen Sollwerte für die Achsen $\alpha1$ bis $\alpha6$ werden nochmal in Feininterpolatoren 25 fein interpoliert und dann an einen Lageregler 26 gegeben, der die einzelnen Geschwindigkeitssollwerte an die Steuerteile 15 der Motoren 7 ausgibt. Eine Steuerung dieser Art ist aus der eingangs genannten Siemens-Zeitschrift im Prinzip bekannt.

Zusätzlich ist noch eine Regeleinheit 27 zur optimalen Veränderung der Bahngeschwindigkeit vorhanden, und zwar gilt dies vor allem für die Fälle, in denen es infolge der Transformation zu unzulässigen Geschwindigkeiten in einzelnen Achsen kommen würde. Um dies zu vermeiden, werden in dem Baustein 27 die aus den vorliegenden Änderungen der Winkel zu erwartenden Soll-Geschwindigkeiten in den einzelnen Achsen $\alpha1$ bis $\alpha6$ extrapoliert und überprüft, ob in einer Achse die zulässige Geschwindigkeit (Winkelgeschwindigkeit) überschritten wird. Ist dies der Fall, so wird — wie durch Leitung 37 angedeutet — in den Bahngeschwindigkeitsführungsteil 23 (Override) regelnd eingegriffen und die Bahngeschwindigkeit V solange verringert, bis der Grenzwert wieder unterschritten ist.

Bedingt durch die kinematischen Gegebenheiten der Roboterhand kann es Achsstellungsbereiche geben, die besonders starke Geschwindigkeitsüberhöhungen einzelner Achsen ergeben.

Es wird daher in der Achse $\alpha5$ ein bestimmter Drehwinkelbereich überwacht und in diesem Bereich ebenfalls zusätzlich die Geschwindigkeit abgesenkt. Der Einsatzpunkt kann dabei abhängig von der vorgegebenen Sollgeschwindigkeit v auf der Bahn bzw. der zugeordneten Beschleunigung verändert werden.

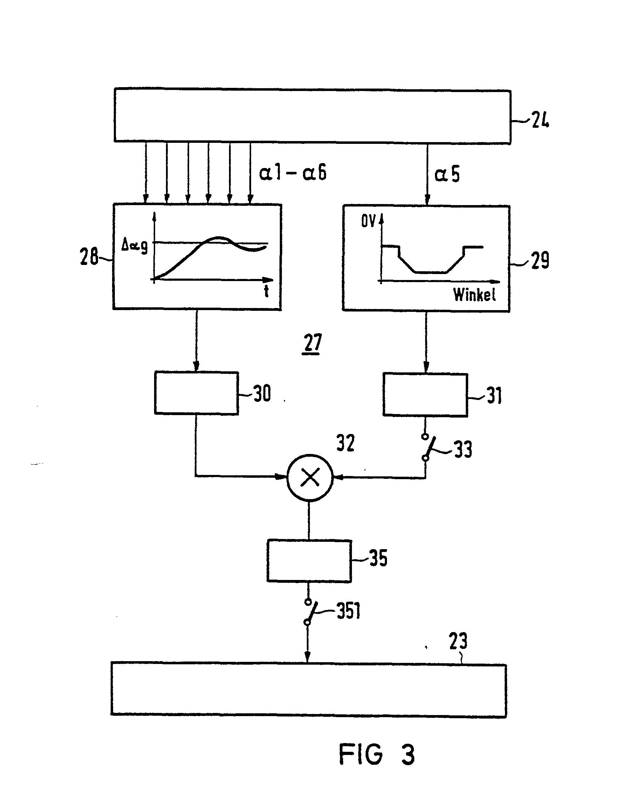

Figur 3 zeigt einige weitere Details. Wie zu erkennen ist, werden die von den einzelnen Achsen $\alpha1$ bis $\alpha6$ kommenden Sollwerte im Grenzwertüberwachungsglied 28 darauf hin überprüft, ob sich einer dieser Sollwerte zu schnell ändert, d. h. eine vorgegebene Geschwindigkeit überschritten wird. Ist dies der Fall, so wird die Bahngeschwindigkeit — wie durch den Baustein 30 angedeutet — um einen bestimmten Betrag abgesenkt.

Gleichzeitig wird auch noch die Achse mit dem Drehwinkel $\alpha5$ überwacht, wie durch den Baustein 29 angedeutet. Innerhalb eines bestimmten Winkelbereiches, der kritisch ist, wird dann ebenfalls die Bahngeschwindigkeit nach einer vorgegebenen Funktion abgesenkt. Dies ergibt dann einen weiteren Reduktionsfaktor, der durch den Baustein 31 angedeutet ist. Diese beiden Werte, die in dem Baustein 30 und 31 vorliegen, werden miteinander in einem Multiplizierglied 32 multipliziert und dienen als Override-Wert in einem Speicher 35. Das ist derjenige Wert, mit dem die vorgegebene Bahngeschwindigkeit V korrigiert, d. h. im Normalfall reduziert wird.

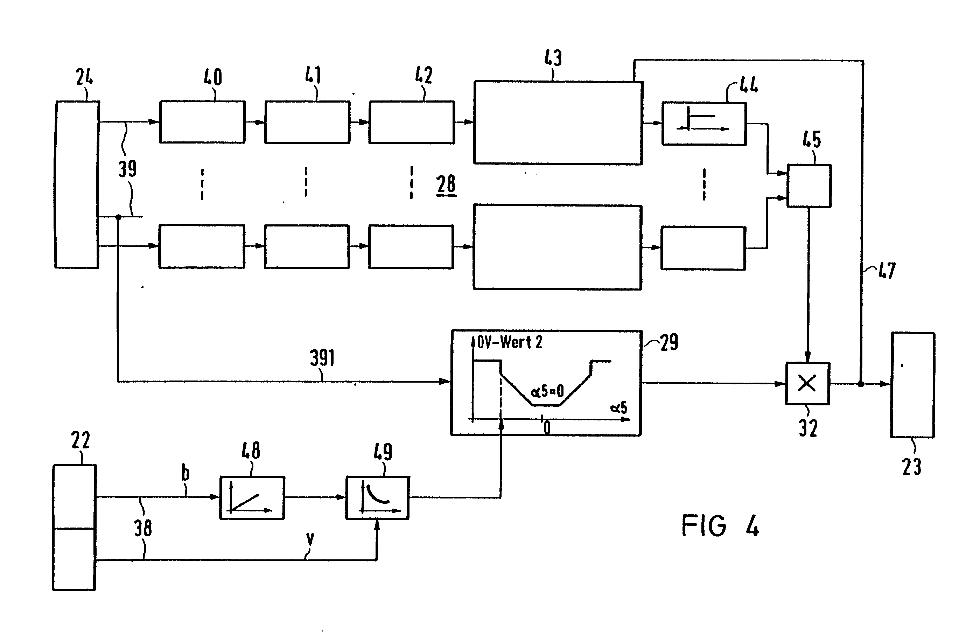

Figur 4 zeigt weitere Details der Steuerung. Wie ersichtlich, werden die aus dem Transformationsbaustein 24 kommenden Winkelwerte der Achsen $\alpha1$ bis $\alpha6$ auf den Leitungen 39 zunächst dazu benutzt, um die Winkeldifferenz aufeinanderfolgender Winkelwerte zu bilden, wie durch Baustein 40 angedeutet. Da diese Differenzbildung in einem vorgegebenen Zeitraster geschieht, sind die sich so ergebenden Werte auch ein Maß für die Geschwindigkeit der betreffenden Achse. Eine Reihe der so gewonnenen Geschwindigkeitswerte wird dann dazu benutzt, um einen Schritt im voraus zu extrapolieren, wie durch den Extrapolationsbaustein 41 angedeutet. Von diesem Wert wird dann in einem Baustein 42 der Absolutwert gebildet und fortlaufend einem Integralregler 43 zugeführt. In diesen Integralregler 43 wird entsprechend der Beziehung

$$\frac{\Delta\alpha_G - \Delta\alpha_{k+1} \cdot l}{\Delta\alpha_G}$$

wobei $\Delta\alpha_G$ maximal zulässige Geschwindigkeitswert und $\Delta\alpha_{k+1}$ die extrapolierte Geschwindigkeit der betreffenden Achse sind, ein Wert gebildet, der aussagt, inwieweit sich die Geschwindigkeit in der betreffenden Achse von dem vorgegebenen Grenzwert $\Delta\alpha_G$ entfernen würde. Dieser sich so ergebende Regelwert wird über einen Begrenzungsbaustein 44 geführt und einer Auswahlschaltung 45 zugeleitet. Eine derartige Verarbeitung der transformierten Drehwinkel wird auch in den übrigen Achsen $\alpha2$ bis $\alpha6$ vorgenommen. Die Auswahlschaltung 45 sorgt nun dafür, daß die Achse, in der der Grenzwert am meisten

3

überschritten ist, zum Zuge kommt, und zwar dergestalt, daß der sich am Reglerausgang ergebende Wert über den Multiplizierbaustein 32 als Override-Signal zur Führung der Bahngeschwindigkeit V im Baustein 23 verwendet wird. Diese Regelung ist solange wirksam, solange in einer der Achsen der jeweils vorgegebene Grenzwert überschritten wird. Wie durch die Leitung 47 angedeutet, wird dabei das Regelverhalten I des Reglers 43 noch abhängig von der sich ergebenden Bahngeschwindigkeit V verändert.

Zusätzlich wird noch der Drehwinkel in der Achse $\alpha 5$ über Leitung 391 dergestalt ausgewertet, daß zwischen Werten des Winkels von z. B. $\pm 20°$ um den Nullpunkt zusätzlich die Bahngeschwindigkeit V um einen bestimmten Faktor reduziert wird. Dieser Faktor wird multiplikativ in dem Glied 32 mit dem vom Integralregler 43 kommenden Reduktionsfaktor verknüpft. Zusätzlich werden auch noch die vom Interpolator 22 kommenden Werte für Beschleunigung b und Geschwindigkeit v über Regler 48, 49 dazu benutzt, die Bereichsgrenzen zu verschieben, innerhalb deren die Geschwindigkeit herabgesetzt wird, und zwar geschieht dies in der Weise, daß mit zunehmender Geschwindigkeit und abnehmender Beschleunigung dieser Bereich verbreitert wird und umgekehrt.

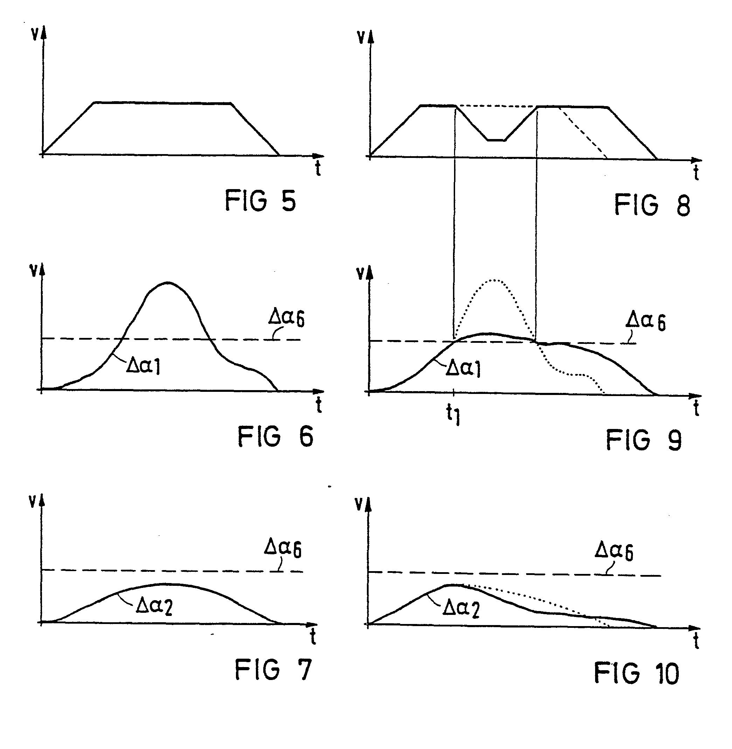

Figur 5 zeigt einen beispielsweise vorgegebenen Bahngeschwindigkeitsverlauf V längs der Geraden L in Abhängigkeit von der Zeit t, und zwar ohne die vorstehend beschriebene Regelung. Wie aus Figur 6 ersichtlich, kann dies beispielsweise dazu führen, daß die Geschwindigkeit $\Delta \alpha 1$ in der Achse $\alpha 1$ den maximal zulässigen Wert $\Delta \alpha_G$ bei weitem überschreiten würde, wohingegen — wie Figur 7 erkennen läßt — die sich ergebende Geschwindigkeitsänderung in der Achse $\alpha 2$ unterhalb des maximal zulässigen Grenzwertes $\Delta \alpha_G$ in dieser Achse bleiben würde.

Die Figuren 8 bis 10 zeigen die Verhältnisse bei Verwendung der vorstehend beschriebenen Geschwindigkeitsregelung. Hierbei ist zunächst in Figur 8 die gleiche Bahngeschwindigkeitskurve mit dem gleichen zeitlichen Verlauf wie in Figur 5 zugrunde gelegt. Wie ersichtlich und wie aus der punktierten Kurve in Figur 9 ersichtlich, würde dies in der Achse $\alpha 1$ zu einem Übersteigen des zulässigen maximalen Wertes führen. Wird daher das Überschreiten des maximal zulässigen Grenzwertes infolge der Transformation durch Extrapolation festgestellt, so wird im Zeitpunkt $t_1$ die Bahngeschwindigkeit V reduziert. Damit ergibt sich die durchgezogene Linie für den Geschwindigkeitssollwert in der Achse $\alpha 1$ gemäß Figur 9. Dies führt dann auch — abweichend von dem gepunktet angedeuteten ursprünglichen Verlauf — zu dem durchgezogen gezeichneten Geschwindigkeitsverlauf $\Delta \alpha 2$ in der Achse $\alpha 2$ (Figur 10) usw.

Wie ersichtlich, wird durch die Regelung dafür gesorgt, daß die Bahngeschwindigkeit V nur solange und soweit zurückgenommen wird, daß die Geschwindigkeit in keiner der Achsen $\alpha 1$ bis $\alpha 6$ unzulässig überschritten wird.

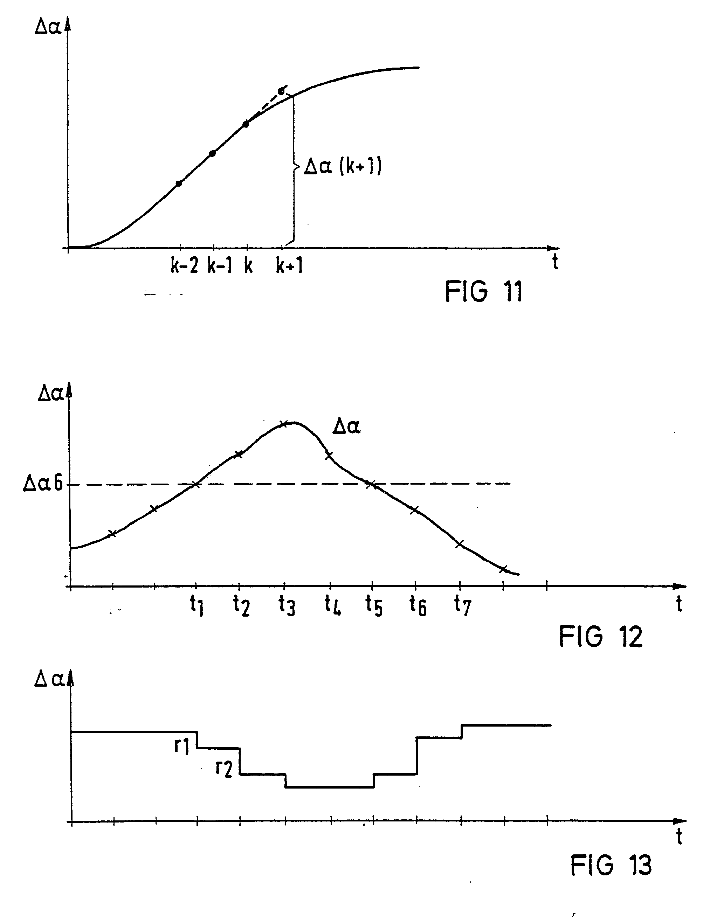

Figur 11 zeigt das Extrapolationsverfahren, und zwar ist der zeitliche Verlauf der Geschwindigkeitssollwerte in einer Achse aufgetragen. Es ist dabei davon ausgegangen, daß gerade der Sollwert zum Zeitpunkt k vorliegt. Dann wird, unter Zuhilfenahme der Sollwerte zu den Zeitpunkten k—1 und k—2 der voraussichtliche Wert zum Zeitpunkt k+1 gemäß einer Taylor-Entwicklung im voraus extrapoliert. Dieser im voraus extrapolierte Wert wird dann mit dem zugeordneten Grenzwert verglichen und die im Zusammenhang mit den vorstehend beschriebenen Figuren erwähnte Prozedur eingeleitet.

Figuren 12 und 13 zeigen das Regelverhalten des Integralreglers nach Figur 4. Wie ersichtlich, ergibt die im Zeitpunkt t1 vorgenommene Extrapolation einen zum Zeitpunkt t2 zu erwartenden Wert, der den vorgegebenen Grenzwert $\Delta \alpha_G$ überschreitet. Es wird daher zum Zeitpunkt t1 die Bahngeschwindigkeit vom 100 % um einen Faktor r1 abgesenkt, und zwar entsprechend der Regelabweichung des Reglers. Die Berechnung im Zeitpunkt t2 ergibt, daß im Zeitpunkt t3 mit einer noch größeren Überschreitung des Grenzwertes zu rechnen ist. Demzufolge wird dann auch zum Zeitpunkt t2 eine noch größere Reduktion der Bahngeschwindigkeit V vorgenommen. Dieser Vorgang wird fortgesetzt. Im Zeitpunkt t5 ergibt die Vorausberechnung, daß der nächste Wert unterhalb des Grenzwertes $\Delta \alpha_G$ liegen würde. Dementsprechend wird zum Zeitpunkt t5 die Geschwindigkeit V entsprechend wieder erhöht usf., bis dann zum Zeitpunkt t7 wieder die ursprüngliche Geschwindigkeit erreicht ist. Die dabei mögliche Reduktion der Geschwindigkeit kann dabei bis zu 1 % der maximal möglichen Geschwindigkeit herabgehen.

**Patentansprüche**

1. Verfahren zur Steuerung eines Mehrachsen-Industrieroboters, bei dem die in raumfest auf den Fußpunkt des Roboters bezogenen Koordinaten (x, y, z) vorgegebene Bewegung der Roboterspitze (19) in entsprechende Sollwerte für die Drehbewegungen rotatorischer bzw. Verfahrwege linearer Antriebe (7) der einzelnen Achsen ($\alpha 1$ bis $\alpha 6$) transformiert wird, wobei dann, wenn mindestens ein Geschwindigkeitssollwert ($\Delta \alpha$) einer Achse ($\alpha 1$ bis $\alpha 6$) seinen zugeordneten Grenzwert ($\Delta \alpha_G$) überschreitet, die Bahngeschwindigkeit (V) der vorgegebenen Bewegung solange reduziert wird, bis keiner der Geschwindigkeitssollwerte ($\Delta \alpha$) seinen zugeordneten Grenzwert ($\Delta \alpha_G$) mehr überschreitet, dadurch gekennzeichnet, daß die Bahngeschwindigkeit (V) der Roboterspitze in vorgegebenen Lagebereichen einzelner Achsen ($\alpha 5$), d. h. Winkelbereiche bei rotatorischen bzw. Streckenbereiche bei linearen Antrieben, zusätzlich reduziert wird und daß dabei die Bereichsgrenzen der Lagebereiche von der jeweiligen Bahngeschwindigkeit (V) und dem Betrag der Bahnbeschleunigung (b) der Roboterspitze derart abhängig gemacht sind, daß, je höher die Bahngeschwindigkeit (V) und je niedriger der Betrag der Beschleunigung (b) der Bahngeschwindigkeit ist, desto mehr die Bereichsbreite vergrößert wird.

2. Verfahren nach Anspruch 1, dadurch gekennzeichnet, daß die Geschwindigkeit (V) der Gesamtbewegung in Abhängigkeit von der Differenz zwischen Sollwerten ($\Delta\alpha$) und Grenzwerten ($\Delta\alpha_G$) geregelt wird.

3. Verfahren nach Anspruch 2, dadurch gekennzeichnet, daß das Regelverhalten von der Bahngeschwindigkeit (V) abhängig gemacht ist.

4. Verfahen nach einem der vorstehenden Ansprüche, dadurch gekennzeichnet, daß mit Hilfe der vorliegenden Geschwindigkeitssollwerte jeder Achse ($\alpha1$ bis $\alpha6$) die in der betreffenden Achse zu erwartenden Geschwindigkeitssollwerte im voraus extrapoliert und überwacht werden.

## Claims

1. Method for the control of a multi-axis industrial robot, in which the movement of the robot tip (19) given in coordinates (x, y, z) relative to the base point of the robot in a space-bound manner, is transformed into corresponding desired values for the movements of rotation rotary or traverse paths of linear drives (7) of the individual axes ($\alpha1$ to $\alpha6$), in which case when at least one speed desired value ($\Delta\alpha$) of an axis ($\alpha1$ to $\alpha6$) exceeds its associated limiting value ($\Delta\alpha_G$), the path speed (V) of the given movement is reduced for so long until not one of the speed desired values ($\Delta\alpha$) exceeds its associated limiting value ($\Delta\alpha_G$) any longer, characterised in that the path speed (V) of the robot tip is additionally reduced in given position ranges of individual axes ($\alpha5$), i.e. angular ranges in the case of rotary or section ranges in the case of linear drives, and in that the range limits of the position ranges are then made dependent upon the respective path speed (V) and the amount of the path acceleration (b) of the robot tip in such a way that the higher the path speed (V) and the lower the amount of the acceleration (b) of the path speed, the more the range width is increased.

2. Method according to claim 1, characterised in that the speed (V) of the total movement is controlled as a function of the difference between desired values ($\Delta\alpha$) and limiting values ($\Delta\alpha_G$).

3. Method according to claim 2, characterised in that the control response is made dependent upon the path speed (V).

4. Method according to one of the preceding claims, characterised in that with the aid of the present speed desired values of each axie ($\alpha1$ to $\alpha6$) the speed desired values to be expected in the relevant axis are extrapolated and monitored in advance.

## Revendications

1. Procédé pour commander un robot industriel à plusieurs axes, selon lequel le déplacement, prédéterminé dans des coordonnées (x, y, z) associées de façon fixe dans l'espace au pied du robot, de la pointe (19) de ce dernier est transformé en des valeurs de consigne correspondantes pour les mouvements de rotation de dispositifs d'entraînement en rotation (7) ou pour les trajets de déplacement de dispositifs d'entraînement linéaire (7) des différents axes ($\alpha1$ à $\alpha6$), et selon lequel, lorsqu'au moins une valeur de consigne ($\Delta\alpha$) de la vitesse d'un axe ($\alpha1$ à $\alpha6$) dépasse la valeur limite ($\Delta\alpha_G$) qui lui est associée, la vitesse (V) du déplacement prédéterminé sur la trajectoire est réduite jusqu'à ce qu'aucune des valeurs de consigne ($\Delta\alpha$) de la vitesse ne dépasse plus la valeur limite ($\Delta\alpha_G$), qui lui est associée, caractérisé par le fait que la vitesse (V) de la pointe du robot sur sa trajectoire est réduite, de façon supplémentaire, dans des gammes de positions prédéterminées de différents axes ($\alpha5$), c'est-à-dire dans des plages angulaires dans le cas de dispositifs d'entraînement en rotation ou des sections linéaires dans le cas de dispositifs d'entraînement linéaire, et que les limites des gammes de positions sont rendues dépendantes de la vitesse respective (V) de la pointe du robot sur sa trajectoire et de la valeur absolue de l'accélération (b) de la pointe du robot sur sa trajectoire de manière que plus la vitesse (V) sur la trajectoire est grande et plus la valeur absolue de l'accélération (b) est faible, plus la largeur des gammes est accrue.

2. Procédé suivant la revendication 1, caractérisé par le fait que la vitesse (V) du déplacement d'ensemble est réglée en fonction de la différence entre des valeurs de consigne ($\Delta\alpha$) et des valeurs de consigne ($\Delta\alpha$) et des valeurs limites ($\Delta\alpha_G$).

3. Procédé suivant la revendication 2, caractérisé par le fait que le comportement de régulation est rendu dépendant de la vitesse (V) sur la trajectoire.

4. Procédé suivant l'une des revendications précédentes, caractérisé par le fait que les valeurs de consigne de la vitesse, à laquelle on peut s'attendre sur l'axe considéré, sont extrapolées par avance et contrôlées à l'aide des valeurs de consigne présentes de la vitesse pour chaque axe ($\alpha1$ à $\alpha6$).

FIG 1

FIG 2

FIG 3

FIG 4

EP 0 167 080 B1

FIG 5

FIG 8

FIG 6

FIG 9

FIG 7

FIG 10

FIG 11

FIG 12

FIG 13